# FASCICULE DE BREVET EUROPEEN

(11) **EP 0 728 808 B1**
(45) Date de publication et mention de la délivrance du brevet: **02.01.2002**
(21) Numéro de dépôt: 96200208.5
(22) Date de dépôt: 31.01.1996
(51) Int. Cl.: C08L 23/02, C08L 25/00

(54) **Composition comprenant un polymère vinylaromatique, une polyoléfine et deux copolymères linéaires**
Zusammensetzung enthaltend ein vinylaromatisches Polymerisat, ein Polyolefin und zwei lineare Copolymerisate
Composition containing a vinyl aromatic polymer, a polyolefin and two linear copolymers

(30) Priorité: 27.02.1995 FR 9502243
(43) Date de publication de la demande: 28.08.1996
(73) Titulaire: Atofina, 92800 Puteaux (FR)
(72) Inventeur: Arsac, Jean-François, F-64000 Pau (FR)
(74) Mandataire: Leyder, Francis

(56) Documents cités:
- EP-A- 0 402 340
- EP-A- 0 422 770
- WO-A-90/05759

## Description

La présente invention concerne une composition comprenant :
- une préparation comprenant un polymère vinylaromatique,
- une polyoléfine,
- un copolymère linéaire d'un monomère vinylaromatique et d'un diène conjugué contenant plus de 50 % en poids d'unités issus du monomère vinylaromatique,
- un copolymère linéaire d'un monomère vinylaromatique et d'un diène conjugué contenant plus de 50 % en poids d'unités issus du diène conjugué.

Les polymères vinylaromatiques et les polyoléfines ne sont habituellement pas compatibles et leur simple mélange ne mène pas à des matériaux présentant de bonnes propriétés mécaniques. L'adjonction aux mélanges de ces deux types de polymère d'agents compatibilisant a déjà été proposé. Le document EP 0402340 propose comme agent compatibilisant un copolymère linéaire dibloc Styrène-Butadiène et un copolymère radial tribloc Styrène-Butadiène. Le document EP 0447806 propose comme agent compatibilisant un copolymère linéaire tribloc Styrène-Butadiène. Le document EP 0545181 propose comme agent compatibilisant un copolymère tribloc linéaire Styrène-Butadiène de formule S₁-B-S₂ dans laquelle les deux blocs de styrène S₁ et S₂ présentent des masses moléculaires distinctes d'au moins 50 %.

Le document WO 90/05759 décrit une composition comprenant une polyoléfine, un polymère ayant une température de transition vitreuse supérieure à celle de la polyoléfine et un agent compatibilisant pouvant être un copolymère à blocs styrène-diène conjugué.

Le document EP-A-422770 décrit une composition contenant une polyoléfine, un caoutchouc greffé par une résine styrénique et un compatibilisant pouvant être un copolymère à blocs styrène-diène conjugué.

La présente invention propose comme agent compatibilisant :
- un copolymère linéaire d'un monomère vinylaromatique et d'un diène conjugué contenant plus de 50 % en poids d'unités issus du monomère vinylaromatique et,
- un copolymère linéaire d'un monomère vinylaromatique et d'un diène conjugué contenant plus de 50 % en poids d'unités issus du diène conjugué.

La composition selon l'invention présente une excellente résistance aux chocs et une excellente résistance au déchirement tout en conservant une bonne rigidité (haut module d'élasticité). De plus, elle est aisée à recycler, facile à mettre en oeuvre grâce à son indice de fluidité adapté a la fois à l'injection et à l'extrusion/thermoformage, et présente une bonne résistance aux corps gras.

La composition selon l'invention est spécifiée dans la revendication 1 et comprend :
- une préparation A comprenant un polymère vinylaromatique,
- une polyoléfine B,
- un copolymère C linéaire d'un monomère vinylaromatique et d'un diène conjugué contenant plus de 50 % et de préférence entre 60 et 90 % en poids d'unités issus du monomère vinylaromatique,
- un copolymère D linéaire d'un monomère vinylaromatique et d'un diène conjugué contenant plus de 50 % et de préférence entre 60 et 90 % en poids d'unités issus du diène conjugué.

La préparation A est issue de la polymérisation ou copolymérisation d'au moins un monomère vinylaromatique.

La préparation A peut être issue de la polymérisation ou copolymérisation d'au moins un monomère vinylaromatique en présence d'un caoutchouc, et peut donc être un polystyrène choc.

Par caoutchouc, on entend ceux habituellement utilisés pour améliorer les propriétés chocs des polymères ou copolymères vinylaromatiques. Ce sont habituellement des polymères ou copolymères issus de la polymérisation ou copolymérisation d'au moins un diène conjugué tels que le polybutadiène, le polyisoprène, les copolymères styrène-butadiène de type élastomère également appelés caoutchouc "SBR" ("styrène-butadiène rubber").

Le caoutchouc est habituellement présent dans la composition A sous la forme de nodules ou de particules. La préparation A peut être obtenue par tout procédé de polymérisation comme un procédé de polymérisation radicalaire ou anionique, en masse, en solution ou en suspension, et pouvant fonctionner en continu ou en discontinu. Pour la fabrication de la préparation A, l'éventuel comonomère d'au moins un monomère vinylaromatique peut être choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.

Lorsque la préparation A contient un caoutchouc, celui-ci y est habituellement présent à raison de 2 à 25 % en poids. Bien entendu, la préparation A peut comprendre plusieurs polymères ou copolymères vinylaromatiques dont éventuellement, un ou plusieurs, contiennent un caoutchouc.

La polyoléfine B est issue de la polymérisation ou copolymérisation d'au moins une oléfine. Il peut donc s'agir d'un polymère ou copolymère. Par oléfine, on entend celles contenant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges.

L'éventuel comonomère d'au moins une oléfine peut être choisi parmi les esters vinyliques tels que l'acétate de vinyle ou le propionate de vinyle, l'acide acrylique, les esters acryliques ou alkylacryliques tels que l'acrylate de méthyle ou le méthacrylate de méthyle.

La polyoléfine B peut être un polyéthylène de moyenne à très basse densité (0,9 ≤ densité ≤ 0,95), un polyéthylène de haute densité (densité > 0,95).

La polyoléfine B peut être le polypropylène ou un copolymère éthylène-propylène, à blocs ou statistique.

La polyoléfine B est de préférence le polyéthylène.

Les copolymères C et D sont issus de la copolymérisation d'au moins un monomère vinylaromatique et d'au moins un diène conjugué. Ils sont linéaires. Ces copolymères peuvent être choisis parmi ceux dont les structures peuvent être représentées par les formules S₁-B₁-S₂, ou S₁-(B/S)ₙ, ou S₁-(B/S)-S₂, ou S₁-B₁-(B/S)ₙ, ou S₁-B₁-S₂-B₂ dans lesquelles S₁ et S₂ représentent des blocs issus d'un monomère vinylaromatique, B₁ et B2 représentent des blocs issus d'un diène conjugué, (B/S) représente un bloc d'un copolymère issu d'un monomère vinylaromatique et d'un diène conjugué, et n représente un nombre entier non nul.

De préférence, le copolymère C comprend au moins trois blocs.

De préférence, le copolymère D comprend au moins trois blocs.

Généralement, le copolymère C présente une masse moléculaire moyenne en poids allant de 30000 à 300000 et de préférence de 80000 à 150000, mesuré par chromatographie à perméation de gel sur la base d'un étalonnage polystyrène.

Généralement, le copolymère D présente une masse moléculaire moyenne en poids allant de 5000 à 200000 et de préférence de 8000 à 80000, mesuré par chromatographie à perméation de gel sur la base d'un étalonnage polystyrène.

Il n'est pas exclu qu'un ou plusieurs blocs de charnière statistique, copolymère d'un monomère vinylaromatique et d'un diène conjugué, soit inséré entre les blocs de polystyrène et de polybutadiène dans les formules précédentes. Par ailleurs, un ou plusieurs de ces blocs peut avoir été réalisé à partir de deux sous-blocs lesquels ont été ensuite couplés par l'intermédiaire d'un agent de couplage difonctionnel, comme cela est courant dans les techniques de polymérisation anionique.

Par monomère vinylaromatique, pouvant entrer dans la composition des ingrédients A, C et D, on entend le styrène, le styrène substitué sur le groupement vinyl par un groupement alkyl tel que l'alpha-méthylstyrène ou l'alpha-éthylstyrène, le styrène substitué sur le cycle par un groupement alkyl tel que l'ortho-vinyltoluène, le para-vinyltoluène, l'ortho-éthylstyrène, le 2-4-diméthylstyrène, le styrène substitué sur le cycle par un halogène comme par exemple le 2,4-dichlorostyrène, le styrène substitué à la fois par un halogène et un groupement alkyl tel que le 2-chloro-4-méthylstyrène, ainsi que le vinylanthracène. Le styrène est un monomère vinylaromatique préféré.

Par diène conjugué, pouvant entrer dans la composition des ingrédients C et D, on entend les diènes conjugués comprenant de 4 à 8 atomes de carbone tel que le 1,3-butadiène, l'isoprène, le 2,3-diméthyl-1,3-butadiène, le piperylène, et leurs mélanges.

La composition selon l'invention comprend :
- 10 à 90 % en poids de préparation A
- 5 à 50 % en poids de polyoléfine B
- 1 à 20 % en poids de copolymère C
- 1 à 20 % en poids de copolymère D

De manière préférée, la composition selon l'invention comprend :
- 50 à 80 % en poids de préparation A
- 10 à 35 % en poids de polyoléfine B
- 4 à 15 % en poids de copolymère C
- 2 à 13 % en poids de copolymère D

La composition selon l'invention peut comprendre des adjuvants habituels à ce genre de composition comme un plastifiant tel qu'une huile minérale ou le stéarate de butyle ou le phtalate de dioctyle, ou comme un stabilisant pouvant être un antioxydant tel que le phénol substitué par un groupement alkyl, par exemple le ditertiobutylparacrésol, ou un phosphite comme le trinonylphényphosphite. Un adjuvant peut également être un agent antistatique, un agent gonflant ou un pigment. Eventuellement, l'un des adjuvants peut également avoir été incorporé dans l'un des ingrédients de la composition selon l'invention avant fabrication de ladite composition. Bien entendu, pour le cas ou la composition selon l'invention est destinée au secteur alimentaire, il convient d'utiliser les adjuvants compatibles sur le plan de la toxicité avec l'application envisagée.

La composition selon l'invention peut être obtenue par mélange à l'état fondu de ses différents ingrédients grâce aux techniques habituellement utilisées pour la réalisation de ce genre de composition.

Tout type de mélangeur, à simple ou double vis, pouvant fonctionner entre 150 et 260° C, peut être utilisé.

La composition selon l'invention peut être extrudée, moulée, injectée, transformée en granulés, ces derniers étant à leur tour destinés à l'élaboration de toute sorte d'articles par injection, extrusion ou thermoformage. La composition selon l'invention peut être transformée par les équipements habituels de transformation des polymères et en particulier du polystyrène, de préférence à une température allant de 150 à 260°C.

Dans les exemples qui suivent, les propriétés des compositions ont été déterminées par les techniques suivantes :
- indice de fluidité à 200° C sous une charge de 5 kg : norme ISO 1133,
- point VICAT sous 1 kg : norme ISO 306A,
- module de flexion : norme ISO 178,
- résistance et allongement en traction : norme ISO R527,
- résistance aux chocs Izod avec entaille : norme ISO 180/1A.

Dans les exemples, les ingrédients désignés par A, B, C et D sont :
A : polystyrène choc, de marque déposée LACQRENE 5240, contenant 9,5 % en poids de polybutadiène sous la forme de nodules, et présentant un indice de fluidité de 2,5 g / 10 min (sous 5 kg à 200° C).
B : polyéthylène de basse densité (densité = 0,917) présentant un indice de fluidité de 2,5 g / 10 min (sous 2,16 kg à 190° C). Cet ingrédient est commercialisé par ELF ATOCHEM sous la marque déposée LACQTENE HX 5010.
C : copolymère linéaire tribloc styrène-butadiène dont la structure peut globalement être représentée par la formule S₁-B-S₂ dans laquelle S₁ et S₂ représentent chacun un bloc de polystyrène, et B représente un bloc de polybutadiène. Ce copolymère contient 73 % en poids d'unités issus du styrène et présente une masse moléculaire moyenne en poids de 120 000, mesuré par chromatographie à perméation de gel sur la base d'un étalonnage polystyrène. Un petit bloc charnière de copolymère statistique styrène-butadiène est situé entre les blocs S₁ et B d'une part, et entre les blocs B et S₂ d'autre part. Le bloc B a été réalisé à partir de deux sous-blocs de polybutadiène, lesquels ont été réunis par l'intermédiaire d'un agent de couplage difonctionnel. Cet ingrédient est commercialisé par FINA sous la marque déposée FINACLEAR 520.
D : Copolymère linéaire tribloc styrène-butadiène dont la structure peut globalement être représentée par la formule S₁-B-S₂ dans laquelle S₁ et S₂ représentent chacun un bloc de polystyrène, et B représente un bloc de polybutadiène. Ce copolymère contient 70 % en poids d'unités issus du butadiène et présente une masse moléculaire moyenne en poids de 20000, mesuré par chromatographie à perméation de gel sur la base d'un étalonnage polystyrène. Le bloc B a été réalisé à partir de deux sous-blocs de polybutadiène, lesquels ont été réunis par l'intermédiaire d'un agent de couplage difonctionnel. Cet ingrédient est commercialisé par SHELL sous la marque déposée KRATON TR 1102.

### Exemples 1 à 4 :

On mélange à température ambiante A, B, C et D se présentant sous la forme de granulés, dans les proportions indiquées dans le tableau 1, en ajoutant 1000 ppm d'un antioxydant. Le mélange est ensuite extrudé à environ 200° C à travers une machine monovis de marque Samafor E45 et granulé en sortie de filière. Des éprouvettes pour la réalisation des tests mécaniques sont ensuite réalisées à partir des granulés par injection à 215° C. Les propriétés des matériaux obtenus sont rassemblées dans le tableau 1.

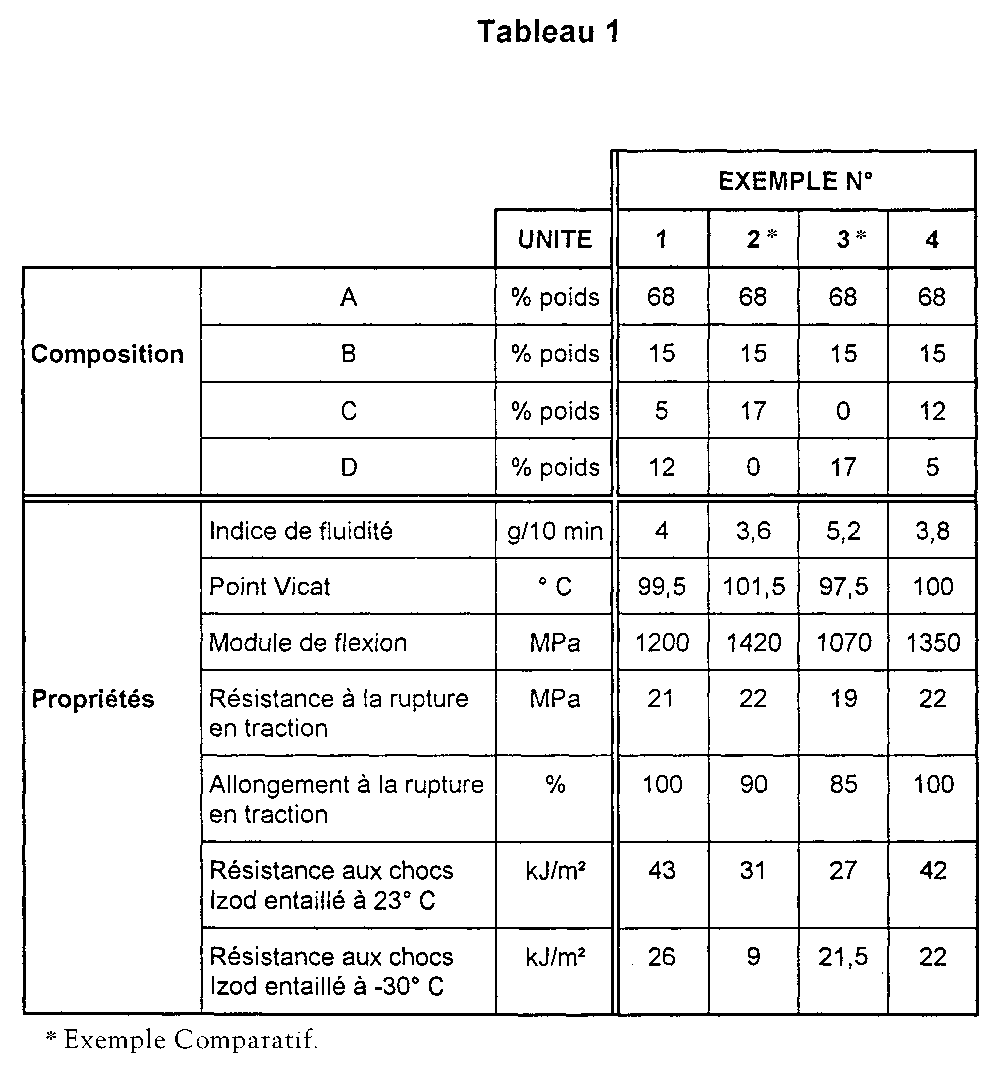

## Revendications

1. Composition comprenant :
- 10 à 90 % en poids d'une préparation A issue de la polymérisation ou copolymérisation d'au moins un monomère vinylaromatique,
- 5 à 50 % en poids d'une polyoléfine B, issue de la polymérisation ou copolymérisation d'au moins une oléfine contenant de deux à vingt atomes de carbone,
- 1 à 20 % en poids d'un copolymère linéaire C d'un monomère vinylaromatique et d'un diène conjugué contenant plus de 50 % en poids d'unités issus du monomère vinylaromatique,
- 1 à 20 % en poids d'un copolymère linéaire D d'un monomère vinylaromatique et d'un diène conjugué contenant plus de 50 % en poids d'unités issus du diène conjugué.

2. Composition selon la revendication 1 **caractérisé en ce que** le copolymère C contient entre 60 et 90 % en poids d'unités issus du monomère vinylaromatique.

3. Composition selon la revendication 1 ou 2 **caractérisé en ce que** le copolymère D contient entre 60 et 90 % en poids d'unités issus du diène conjugué.

4. Composition selon la revendication 1 à 3 **caractérisé en ce que** le copolymère C comprend au moins 3 blocs.

5. Composition selon l'une des revendications 1 à 4 **caractérisé en ce que** le copolymère D comprend au moins 3 blocs.

6. Composition selon l'une des revendications 1 à 5 **caractérisé en ce que** la polyoléfine B est un polyéthylène.

7. Composition selon l'une des revendications 1 à 6 **caractérisé en ce que** la préparation A comprenant un polymère ou copolymère vinylaromatique comprend également un caoutchouc.

8. Composition selon la revendication 7 **caractérisé en ce que** le caoutchouc est un polybutadiène.

9. Composition selon la revendication 7 ou 8 **caractérisé en ce que** le caoutchouc est présent dans la préparation A à raison de 2 à 25 % en poids.

10. Composition selon l'une des revendications 7 à 9 **caractérisé en ce que** la préparation A est un polystyrène choc.

11. Composition selon la revendication 10 **caractérisé en ce qu'**elle comprend
- 50 à 80 % en poids de préparation A
- 10 à 35 % en poids de polyoléfine B
- 4 à 15 % en poids de copolymère C
- 2 à 13 % en poids de copolymère D

12. Composition selon l'une des revendications 1 à 11 **caractérisée en ce que** la polyoléfine B est un polyéthylène dont la densité va de 0,9 à 0,95.

13. Composition selon l'une des revendications 1 à 11 **caractérisée en ce que** la polyoléfine B est un polyéthylène de densité supérieure à 0,95.

14. Composition selon l'une des revendications 5 et 7 à 11 **caractérisée en ce que** la polyoléfine B est le polypropylène ou un copolymère éthylène-propylène, à blocs ou statistique.

15. Composition selon l'une des revendications 1 à 13 **caractérisée en ce que** la polyoléfine B est issue de la polymérisation de l'éthylène sans comonomère.

16. Composition selon l'une des revendications précédentes **caractérisée en ce qu'**au moins un copolymère parmi C et D est choisi parmi ceux représentés par les formules S₁-B₁-S₂, S₁-(B/S)n, S₁-(B/S)-S₂, S₁-B₁-(B/S)n, S₁-B₁-S₂-B₂ dans lesquelles S₁ et S₂ représentent des blocs issus d'un monomère vinylaromatique, B₁ et B₂ représentent des blocs issus d'un diène conjugué, (B/S) représente un bloc d'un copolymère issu d'un monomère vinylaromatique et d'un diène conjugué et n représente un nombre entier non nul.

17. Composition selon la revendication précédente **caractérisée en ce qu'**au moins un bloc de charnière statistique, copolymère d'un monomère vinylaromatique et d'un diène conjugué, est inséré entre les blocs de polystyrène et de polybutadiène d'au moins un copolymère ayant l'une des formules représentées.

18. Composition selon l'une des revendications précédentes **caractérisée en ce que** dans les copolymères C et D, le monomère vinylaromatique est le styrène et le diène conjugué est le 1,3-butadiène.

19. Utilisation d'une composition de l'une des revendications précédentes en injection.

20. Utilisation d'une composition de l'une des revendications 1 à 15 en moulage.

21. Utilisation d'une composition de l'une des revendications 1 à 15 en thermoformage.

22. Utilisation d'une composition de l'une des revendications 1 à 15 en extrusion.

## Claims

1. Composition comprising:
- 10 to 90 % by weight of a preparation A obtained by the polymerisation or copolymerisation of at least one vinylaromatic monomer,
- 5 to 50 % by weight of a polyolefin B obtained by the polymerisation or copolymerisation of at least one olefin containing from two to eight carbon atoms,
- 1 to 20 % by weight of a linear copolymer C, of a vinylaromatic monomer and a conjugated diene, containing more than 50 % by weight of units obtained from the vinylaromatic monomer,
- 1 to 20 % by weight of a linear copolymer D, of a vinylaromatic monomer and a conjugated diene, containing more than 50 % by weight of units obtained from the conjugated diene.

2. Composition according to claim 1, **characterised in that** copolymer C contains between 60 and 90 % by weight of units obtained from the vinylaromatic monomer.

3. Composition according to claim 1 or 2, **characterised in that** copolymer D contains between 60 and 90 % by weight of units obtained from the conjugated diene.

4. Composition according to claims 1 to 3, **characterised in that** copolymer C comprises at least three blocks.

5. Composition according to any of claims 1 to 4, **characterised in that** copolymer D comprises at least three blocks.

6. Composition according to any of claims 1 to 5, **characterised in that** polyolefin B is a polyethylene.

7. Composition according to any of claims 1 to 6, **characterised in that** preparation A which includes a vinylaromatic polymer or copolymer also includes a rubber.

8. Composition according to claim 7, **characterised in that** the rubber is a polybutadiene.

9. Composition according to claim 7 or 8, **characterised in that** the rubber is present in preparation A in a proportion of 2 to 25 % by weight.

10. Composition according to any of claims 7 to 9, **characterised in that** preparation A is an impact polystyrene.

11. Composition according to claim 10, **characterised in that** it comprises:
- 50 to 80 % by weight of preparation A
- 10 to 35 % by weight of polyolefin B
- 4 to 15 % by weight of copolymer C
- 2 to 13 % by weight of copolymer D

12. Composition according to any of claims 1 to 11, **characterised in that** polyolefin B is a polyethylene with a density of from 0.9 to 0.95.

13. Composition according to any of claims 1 to 11, **characterised in that** polyolefin B is a polyethylene with a density higher than 0.95.

14. Composition according to any of claims 5 and 7 to 11, **characterised in that** polyolefin B is polypropylene or an ethylene/propylene block or statistical copolymer.

15. Composition according to any of claims 1 to 13, **characterised in that** polyolefin B is obtained by the polymerisation of ethylene without a comonomer.

16. Composition according to any of the preceding claims, **characterised in that** at least one copolymer, C or D, is selected from those represented by the formulas S₁-B₁-S₂, S₁-(B/S)n, S₁-(B/S)-S₂, S₁-B₁-(B/S)n, S₁-B₁-S₂-B₂ in which S₁ and S₂ represent blocks obtained from a vinylaromatic monomer, B₁ and B₂ represent blocks obtained from a conjugated diene, (B/S) represents a block of a copolymer obtained from a vinylaromatic monomer and a conjugated diene, and n represents an integer other than zero.

17. Composition according to the preceding claim, **characterised in that** at least one statistical hinge block copolymer of a vinylaromatic monomer and a conjugated diene is inserted between the blocks of polystyrene and polybutadiene of at least one copolymer having one of the formulas represented.

18. Composition according to any of the preceding claims, **characterised in that** in copolymers C and D, the vinylaromatic monomer is styrene and the conjugated diene is 1,3-butadiene.

19. Use of a composition from any of the preceding claims in injection.

20. Use of a composition from any of claims 1 to 15 in moulding.

21. Use of a composition from any of claims 1 to 15 in thermoforming.

22. Use of a composition from any of claims 1 to 15 in extrusion.

## Patentansprüche

1. Zusammensetzung mit:
- 10 bis 90 Gew.-% eines Präparates A, das aus der Polymerisation oder Copolymerisation wenigstens eines vinylaromatischen Monomers hervorgegangen ist,
- 5 bis 50 Gew.-% eines Polyolefins B, das aus der Polymerisation oder Copolymerisation wenigstens eines Olefins mit zwei bis zwanzig Kohlenstoffatomen hervorgegangen ist,
- 1 bis 20 Gew.-% eines linearen Copolymers C eines vinylaromatischen Monomers und eines konjugierten Diens mit mehr als 50 Gew.-% der aus dem vinylaromatischen Monomer hervorgegangenen Einheiten,
- 1 bis 20 Gew.-% eines linearen Copolymers D eines vinylaromatischen Monomers und eines konjugierten Diens mit mehr als 50 Gew.-% der aus dem konjugierten Dien hervorgegangenen Einheiten.

2. Zusammensetzung gemäß Anspruch 1, **dadurch gekennzeichnet, dass** das Copolymer C zwischen 60 und 90 Gew.-% der aus dem vinylaromatischen Monomer hervorgegangenen Einheiten aufweist.

3. Zusammensetzung gemäß Anspruch 1 oder 2, **dadurch gekennzeichnet, dass** das Copolymer D zwischen 60 und 90 Gew.-% der aus dem konjugierten Dien hervorgegangenen Einheiten aufweist.

4. Zusammensetzung gemäß Anspruch 1 bis 3, **dadurch gekennzeichnet, dass** das Copolymer C wenigstens 3 Blöcke aufweist.

5. Zusammensetzung gemäß einem der Ansprüche 1 bis 4, **dadurch gekennzeichnet, dass** das Copolymer D wenigstens 3 Blöcke aufweist.

6. Zusammensetzung gemäß einem der Ansprüche 1 bis 5, **dadurch gekennzeichnet, dass** das Polyolefin B ein Polyethylen ist.

7. Zusammensetzung gemäß einem der Ansprüche 1 bis 6, **dadurch gekennzeichnet, dass** das Präparat A, welches ein vinylaromatisches Polymer oder Copolymer aufweist, ebenfalls einen Kautschuk umfasst.

8. Zusammensetzung gemäß Anspruch 7, **dadurch gekennzeichnet, dass** der Kautschuk ein Polybutadien ist.

9. Zusammensetzung gemäß Anspruch 7 oder 8, **dadurch gekennzeichnet, dass** der Kautschuk in dem Präparat A in einem Verhältnis von 2 bis 25 Gew.-% vorliegt.

10. Zusammensetzung gemäß einem der Ansprüche 7 bis 9, **dadurch gekennzeichnet, dass** das Präparat A ein Schock-Polystyrol ist.

11. Zusammensetzung gemäß Anspruch 10, **dadurch gekennzeichnet, dass** sie aufweist:
- 50 - 80 Gew.-% des Präparates A
- 10- 35 Gew.-% des Polyolefins B
- 4 bis 15 Gew.-% des Copolymers C
- 2 bis 13 Gew.-% des Copolymers D.

12. Zusammensetzung gemäß einem der Ansprüche 1 bis 11, **dadurch gekennzeichnet, dass** das Polyolefin B ein Polyethylen ist, dessen Dichte von 0,9 bis 0,95 reicht.

13. Zusammensetzung gemäß einem der Ansprüche 1 bis 11, **dadurch gekennzeichnet, dass** das Polyolefin B ein Polyethylen mit höherer Dichte als 0,95 ist.

14. Zusammensetzung gemäß einem der Ansprüche 5 und 7 bis 11, **dadurch gekennzeichnet, dass** das Polyolefin B Polypropylen oder ein blockartiges oder statistisches Ethylen-.Propylen-Copolymer ist.

15. Zusammensetzung gemäß einem der Ansprüche 1 bis 13, **dadurch gekennzeichnet, dass** das Polyolefin B aus der Polymerisation von Ethylen ohne Comonomer hervorgegangen ist.

16. Zusammensetzung gemäß einem der vorherigen Ansprüche, **dadurch gekennzeichnet, dass** wenigstens ein Copolymer aus C und D aus denjenigen ausgewählt ist, die durch die Formeln S₁-B₁-S₂, S₁-(B/S)n, S₁-(B/S)-S₂, S₁-B₁-(B/S)n, S₁-B₁-S₂-B₂ dargestellt sind, wobei S₁ und S₂ aus einem vinylaromatischen Monomer hervorgegangene Blöcke darstellen, B₁ und B₂ aus einem konjugierten Dien hervorgegangene Blöcke darstellen, (B/S) einen Block eines Copolymers darstellt, das aus einem vinylaromatischen Monomer und einem konjugierten Dien hervorgegangen ist, und n eine ganze Zahl ungleich 0 darstellt.

17. Zusammensetzung gemäß dem vorherigen Anspruch, **dadurch gekennzeichnet, dass** wenigstens ein Block mit statistischem Drehgelenk, nämlich das Copolymer eines vinylaromatischen Monomers und eines konjugierten Diens, zwischen die Polystyrol- und Polybutadienblöcke von wenigstens einem Copolymer mit einer der dargestellten Formeln eingeschoben wird.

18. Zusammensetzung gemäß einem der vorherigen Ansprüche, **dadurch gekennzeichnet, dass** in den Copolymeren C und D das vinylaromatische Monomer Styrol ist und das konjugierte Dien 1,3-Butadien ist.

19. Verwendung einer Zusammensetzung gemäß einem der vorherigen Ansprüche in der Spritzung.

20. Verwendung einer Zusammensetzung gemäß einem der Ansprüche 1 bis 15 im Pressformen.

21. Verwendung einer Zusammensetzung gemäß einem der Ansprüche 1 bis 15 im Wärmeformen.

22. Verwendung einer Zusammensetzung gemäß einem der Ansprüche 1 bis 15 im Extrudieren.
